## Europäisches Patentamt

## European Patent Office

## Office européen des brevets

(11) Veröffentlichungsnummer: **0 196 020**
**A2**

(12) # EUROPÄISCHE PATENTANMELDUNG

(21) Anmeldenummer: 86103811.5

(22) Anmeldetag: 20.03.86

(51) Int. Cl.⁴: **G 01 N 29/04,** G 01 N 27/82

(30) Priorität: 27.03.85 DE 3511076

(43) Veröffentlichungstag der Anmeldung: 01.10.86
Patentblatt 86/40

(84) Benannte Vertragsstaaten: **AT BE CH DE FR GB IT LI LU NL SE**

(71) Anmelder: **Kopp GmbH International Pipeline Services, Friedrich-Ebert-Strasse 131, D-4450 Lingen (DE)**

(72) Erfinder: **Krieg, Gunther, Prof. Dr., Im Rennich 12, D-7500 Karlsruhe 41 (DE)**
Erfinder: **Goedecke, Hartmut, Dipl. Ing., Amselweg 8, D-6290 Weilburg (DE)**

(74) Vertreter: **Busse & Busse Patentanwälte, Postfach 1226, D-4500 Osnabrück (DE)**

(54) **Molch für elektromagnetische Prüfungen an Rohrleitungswandlungen aus Stahl sowie Verfahren hierzu.**

(57) Ein Molch (2) für elektromagnetische Prüfungen an Rohrleitungswandungen (1) aus Stahl o. dgl. ferromagnetischem Material, welcher beispielsweise für Streuflußmessungen mit einer Magnetisierungsspule (26, 37) ausgestattet ist, läßt sich zu einer Ultraschallmessung ergänzen, die induktiv angeregt und induktiv hinsichtlich der Laufzeit bis zu einer Reflektionsfläche und zurück gemessen wird, indem in einem oder mehreren der Polbereiche eine Hochfrequenz-Stromspule zur Abgabe und/oder Aufnahme steilflankiger, induktiv an die Rohrleitungswandung gekoppelter Wellen angeordnet ist. Das zugehörige Verfahren geht von einem stationären Magnetfeld aus, in welchem hochfrequente Stromimpulse erzeugt werden, um über induzierte Ströme Schwingungen in der Rohrwandung auszulösen. Die Laufzeit dieser Schwingungen zu einer Reflektionsstelle und zurück läßt sich messen, um einen Anhaltspunkt über die intakte Dicke der Rohrwandung zu erhalten.

- 1 -

Molch für elektromagnetische Prüfungen
an Rohrleitungswandungen aus Stahl sowie
Verfahren hierzu.

Die Erfindung betrifft einen Molch für elektromagnetische
Prüfungen an Rohrleitungswandungen aus Stahl nach dem Oberbegriff des Anspruchs 1 sowie ein Verfahren nach dem Oberbegriff des Anspruchs 22.

Für die zerstörungsfreie Prüfung und Überwachung von Rohrwandungen aus ferromagnetischem Material ist es bekannt,
Magnetfelder oder Wirbelstromfelder in die Rohrwandung zu
induzieren und die sich im wandnahen Bereich ergebenden
Felder auf Normabweichungen zu überwachen.

Ein solches Prüfungssystem würde in Verbindung mit einem
Molch, der durch eine Fernrohrleitung getrieben wird, die
Feststellung von Fehlern in der Wandung des Rohres ermöglichen. Risse oder sonstige Fehlstellen im Bereich
der Wandung unterbrechen den normgemäß in der Wandung
verlaufenden Induktionspfad und führen zu Streufeldern
durch die Luft hindurch, die zuverlässig erkennbar sind.

Die Überprüfung der Rohrleitungswandung wäre damit aber
noch unvollkommen, da z.B. Schwächungen der Rohrwandung
z.B. durch Korrosion, kaum aufzudecken sind.

Aufgabe der Erfindung ist es dementsprechend, einen Molch für elektromagnetische Prüfungen zu schaffen, der ein vervollständigtes Prüfungsergebnis mit vertretbarem gerätetechnischen Aufwand und hoher Zuverlässigkeit liefert, wobei der Molch den Anforderungen an Handhabbarkeit und Robustheit für den rauhen Außenbetrieb gerecht werden kann. Aufgabe der Erfindung ist es gleichfalls, ein entsprechendes Verfahren zur elektromagnetischen Prüfung der Wandstärke von Rohrleitungen zu schaffen.

Gemäß der Erfindung wird diese Aufgabenstellung von einem Molch nach dem Oberbegriff des Anspruchs 1 ausgehend durch die kennzeichnenden Merkmale des Anspruchs 1 gelöst.

Es hat sich nämlich gezeigt, daß es durchaus möglich und praktikabel ist, mit den Mitteln eines magnetischen Feldes Auslenkungen und Magnetostriktion in der Rohrwandung in einem solchen Maße zu erzeugen, daß eine vorwiegend radial durch die Wandung hindurchlaufende Schwingung erzeugt, an der Außenwandung (bzw. an davorliegenden Rissen, Lappen, Rosthöhlungen) reflektiert und zur Innenwandung des Rohres zurückgetragen wird. In Verbindung mit einem anstehenden Magnetfeld ergibt sich hier wieder infolge der Wechselwirkung mechanischer Materialschwingungen mit einem anstehenden Magnetfeld, daß eine meßbare Induktion auftritt, deren Verzögerung gegenüber dem auslösenden Magnetimpuls ein Maß für die Laufzeit der Schwingung durch die Wandung und zurück ist. Diese Laufzeit gibt die Stärke der Wandung an, deren Abweichung von der Sollstärke als Fehler zu registrieren ist.

Die dynamischen Eigenschaften einer hierzu benötigten Sendespule ergeben sich insbesondere aus den im Mikrosekunden-Bereich liegenden Laufzeit der ausgesandten und reflektierten Schwingungswelle. Dementsprechend wird eine Sendespule mit hinreichend kleinen Zeitkonstanten vorausgesetzt.

Weiter wird ein beim Senden und beim Empfang zu überlagerndes stationäres oder quasistationäres Magnetfeld
vorausgesetzt, das räumlich mit dem ausgesandten impulsförmigen Magnetfeld verkoppelt ist. Für die Bereitstellung
eines solchen stationären Magnetfeldes kann mit besonderem
Vorteil auf ein Induktionssystem zurückgegriffen werden,
welches zusätzlich eine Streuflußmessung im Innenwandbereich vornimmt.

Dabei ist auch ein Magnetsystem zur Streuflußüberwachung
geschaffen, welches mit zwei diametral einander gegenüberliegenden Magnetköpfen für einen (gegabelten) Feldverlauf
in Umfangsrichtung sorgt. Damit sind die besonders gefährlichen Längsrisse in den Rohren auffindbar. Gleichzeitig lassen sich die Magnetköpfe gut zu den Ultraschallgebern ausgestalten und - etwa in einem rotierenden Meßsystem -
eine besonders effektive Rohrüberwachung zu erhalten.

Die erfindungsgemäße Aufgabenstellung wird weiterhin von
einem Verfahren nach dem Oberbegriff des Anspruchs 22 ausgehend durch dessen kennzeichnende Merkmale gelöst, wie aus
den vorstehenden Erläuterungen zu dem Molch ohne weiteres
verständlich wird.

Weitere Merkmale und Vorteile der Erfindung ergeben sich
aus den Ansprüchen und der nachfolgenden Beschreibung, in
der ein Ausführungsbeispiel des Gegenstands der Erfindung
anhand einer Zeichnung näher erläutert ist. In der Zeichnung zeigen:

Fig. 1     Längsschnitt durch ein Rohr mit einem Meßmolch,
Fig. 2     Schnitt nach Linie II-II in Fig. 1,

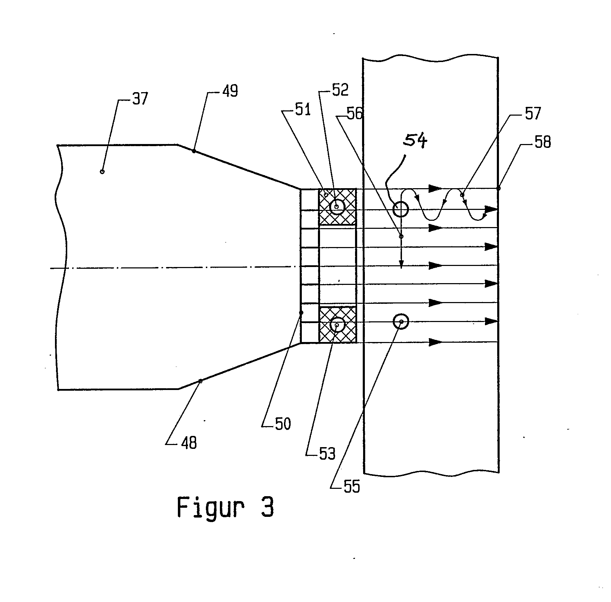

Fig. 3     vergrößerter Schnitt nach Linie III-III in Fig. 2,
Fig. 4     Schnitt nach Linie IV-IV in Fig. 1,
Fig. 5     Schnitt nach Linie V-V in Fig. 1 und
Fig. 6     Schnitt durch eine abgewandelte Ausführungsform
           ähnlich dem Schnitt nach Fig. 2.

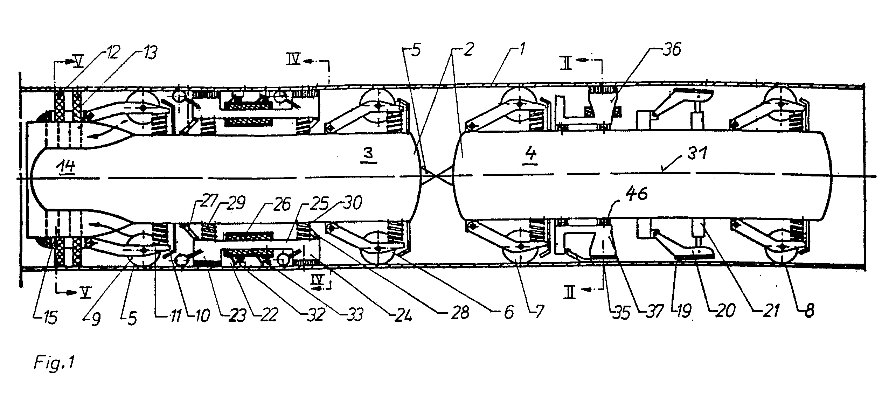

In Fig. 1 ist ein Abschnitt eines zylindrischen, insgesamt
mit 1 bezeichneten Stahlrohrs dargestellt, in dem sich ein insgesamt mit 2 bezeichneter Meßmolch befindet. Der Meß- molch-besteht im Kern aus zwei Molchgliedern 3 und 4, die über eine Kupplung 5 miteinander verbunden sind. Die Molchglieder 3 und 4 sind im wesentlichen zylindrisch und weisen einen gegenüber dem Durchmesser des Rohrs 1 sehr viel kleinerem (etwa halben) Durchmesser auf. Sie bestehen aus in sich steifen Behältern aus paramagnetischem Material wie beispielsweise Edelstahl, Messing oder Kunststoff. Der hohle Innenraum wird zur Unterbringung von Meß- und Steuerungseinrichtungen genutzt.

Außenseitig sind an den Molchgliedern 3 und 4 verschiedene Teile angeordnet, die mit "Fahrwerk" überschrieben werden können. So besitzt das Molchglied 3 einen Satz vorderer Rollen 5 und einen Satz hinterer Rollen 6. Desgleichen besitzt das Molchglied 4 einen Satz vorderer Rollen 7 und einen Satz hinterer Rollen 8. Zu jedem dieser Rollensätze gehören vier (mindestens aber drei) gleichmäßig am Umfang verteilte Rollen 9, die an einem über eine Feder 10 abgestützten Längslenker 11 geführt sind. Damit ist jedes der Molchglieder 3 und 4 allseitig abgestützt und auf die Mitte des Rohres 1 zentriert.

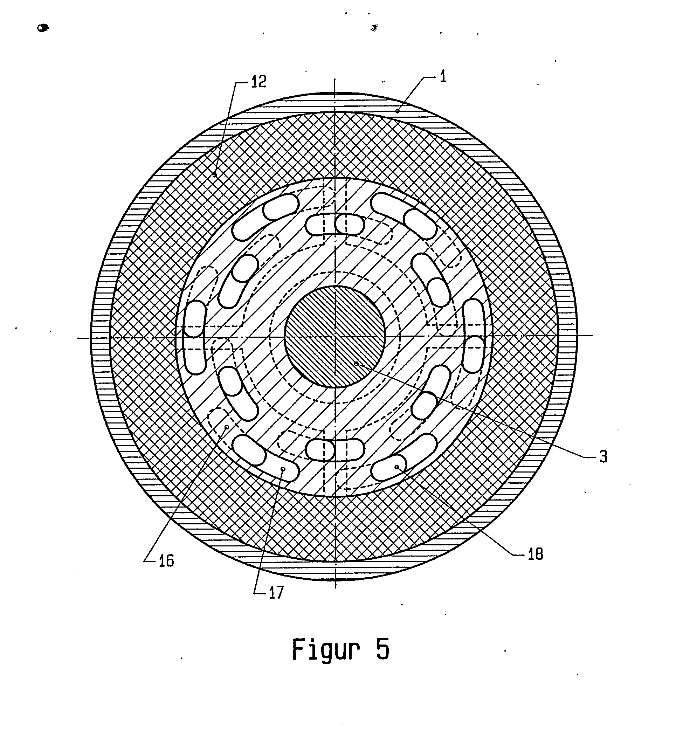

Da Molche üblicherweise mit durchgeförderten Flüssigkeiten in Pipelines "mitschwimmen" oder durch Flüssigkeits- oder Gasbeaufschlagung von hinten vorgetrieben werden, sind am vorderen Ende des Molchglieds 3 zwei Dichtscheiben 12,13 vorgesehen, die sich mit ihrem Umfang an der Innenwandung des Rohres 1 anlegen und den Querschnitt in einem außenseitigen Ringbereich absperren. Zwischen diesen Dichtscheiben 12,13 und einer verjüngten Nase 14 des Molchglieds 3 ist ein Ringkanal 15 ausgebildet, durch den hindurch flüssiges oder gasförmiges Medium von hinten nach vorne hindurchtreten kann, wobei die Strömungswiderstände im Ringkanal für eine ausreichende Vortriebskraft sorgen. Um diese Vortriebskraft besser steuern zu können, sind in dem Ringkanal 15 zwei gegeneinander verdrehbare Lochscheiben 16 und (in Fig. 5 dahinterliegend) 17 angeordnet, mit denen aufzuweitende bzw.zu verengende Durchlaßbereiche 18 geschaffen sind. Mit Hilfe eines beispielsweise mit einer Rolle 9 verbundenen Tachometers läßt sich die Geschwindigkeit überwachen und in Abhängigkeit von dieser eine Erweiterung (bei zu hoher Geschwindigkeit) bzw. eine Verengung (bei zu geringer Geschwindigkeit) der Öffnungen 18 steuern.

Zum Fahrwerk gehört auch ein Satz von Bremsen 19, die am Molchglied 4 angeordnet sind und mit schwenkbaren Bremskufen 20 , über hydraulische Stellzylinder 21 betätigbar nach außen gegen die Rohrrinnenwandung gedrückt werden können, wenn die Steuermöglichkeiten des Ringkanals 15 nicht mehr ausreichen oder wenn eine Notbremsung vorzunehmen ist.

Die hierfür erforderlichen Steuerleistungen werden üblicherweise durch mitgeführte Batterien aufgebracht, sie können aber auch laufend mit Hilfe der Rollen 9 als mechanische Energie aufgenommen und durch Dynamos, Pumpen u. dgl. in elektrische bzw. hydraulische Energie umgesetzt werden.

Auf diese Weise kann der Molch 2 mit kontrollierter Geschwindigkeit auf langen Strecken von beispielsweise 50, 100 oder mehr Kilometern durch eine Fernrohrleitung bewegt werden, um diese mit seinen nachfolgend zu erläuternden Meßeinrichtungen zu überprüfen.

Zur elektromagnetischen Überprüfung der Rohrleitungsinnenwandungen besitzt jedes der beiden Molchglieder 3,4 ein Meßsystem zur Streufeldüberwachung, und zwar umfaßt das Molchglied 3 einen insgesamt mit 22 bezeichnetes Meßsystem mit acht gleichförmig am Umfang verteilten Elektromagneten, die zwei in axialer Flucht zueinanderliegende Meßköpfe 23, 24, ein die Meßköpfe verbindendes Joch 25 und eine Magnetisierungsspule 26 auf diesen Meßköpfen aufweisen. Die Elektromagnete sind jeweils an Parallelogrammlenkern 27,28 beweglich aufgehängt und über Federn 29,30 gegen die Rohrinnenwand nach außen angedrückt, um die Luftspalt-Streuverluste klein zu halten.

Das Feld eines jeden Elektromagneten verläuft vorwiegend parallel zu einer als Symmetrieachse für das Rohr 1 und den Molch 2 eingezeichneten Mittelachse 31.

Der Feldverlauf im Rohr würde gestört, wenn an dessen Rohrinnenwand quer oder schräg zur Achsrichtung verlaufende Risse oder Öffnungen auftreten. Das sich dabei ergebende Streufeld wird durch zwei jedem Elektromagneten zugeordnete und zwischen dessen Magnetköpfen 23,24 liegende Magnetsensoren 32,33 aufgefangen, die zusätzlich durch eine bewegliche Aufhängung und Federn gegen die Rohrinnenwand gedrückt werden.

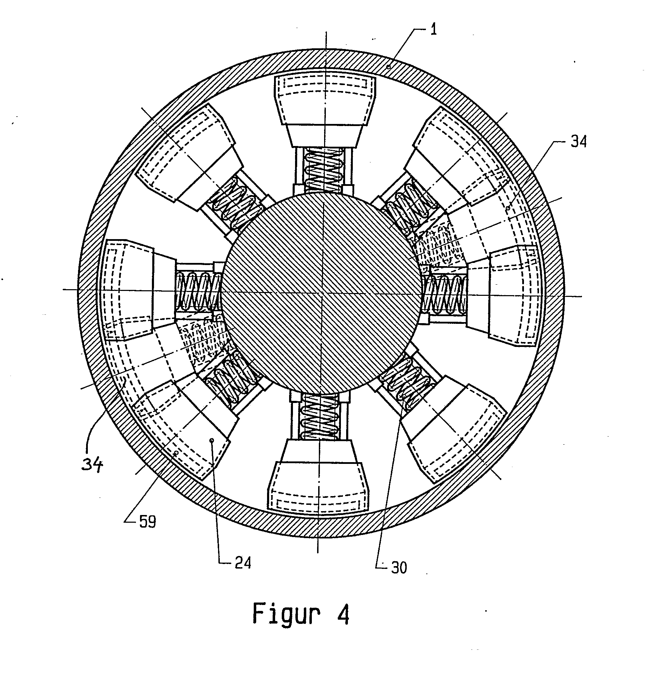

Aus Fig. 4 ist in vergrößerter Darstellung die räumliche Verteilung der Elektromagnete mit Ihren Magnetköpfen 24 am Umfang zu erkennen. Mit acht sternförmig verteilten Magnetköpfen 24 ergeben sich schmale Überwachungssektoren mit geringen Zwischenräumen. Wie durch strichpunktiert eingezeichnete Magnetköpfe 34 angedeutet ist, können durch auf Lücke gesetzte Magnetköpfe (z.B. in einem zusätzlichen in axialem Abstand angeordneten Satz von Elektromagneten) die verbleibenden Sektorlücken geschlossen werden.

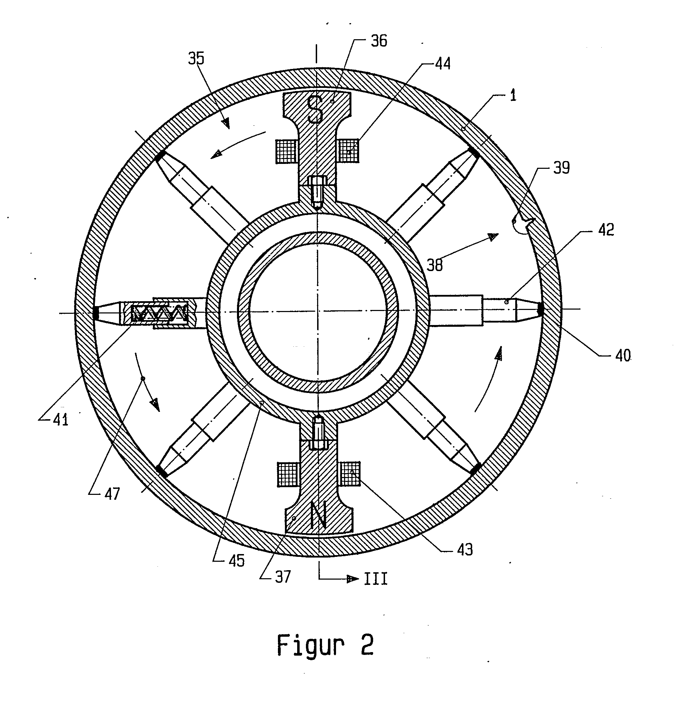

Auch bei lückenloser Verteilung dieser Elektromagnete würden allerdings die besonders gefährlichen Längsrisse in Leitungen kaum entdeckt, da sie den achsparallelen Magnetfluß nicht behindern. Zur Erfassung solcher Längsrisse ist ein neuartiges zweites Meßsystem vorgesehen, das in räumlicher und funktioneller Trennung von dem Vorgenannten auf dem Molchglied 4 als ein Meßsystem 35 für Längsrisse angeordnet ist. Dieses Meßsystem sorgt für einen in Umfangsrichtung im Rohr 1 verlaufenden Magnetfluß, wozu zwei Magnetköpfe 36,37 diametral einander gegenüberliegend als Nordpol und Südpol (vgl. Fig. 2) auf das Rohr 1 gerichtet sind. Es ergibt sich ein geteiltes, zum einen über den halben Umfang nach rechts und zum anderen über den halben Umfang nach links von Nord nach Süd verlaufendes Magnetfeld. Wird dies,wie bei 38 in Fig. 2 angedeutet, durch einen an der Innenwandung offenen Riß behindert, dann tritt ein Streufluß 39 in diesem Bereich aus, der mit verfügbaren Magnetsensoren gemessen werden kann.

Zu diesem Zweck sind in der gleichen Querschnittsebene mit den Polen 36,37 sechs Streuflußsensoren 40 mit in Winkelabständen zueinander sternförmig verteilt und an telekopartig ausfahrbaren sowie über eine innere Feder 41 nach außen expandierte Halterungen 42 gelagert, so daß die Sensoren 40 einen guten Kontakt mit der Rohrinnenwandung haben.

Da diese Anordnung zwischen den Sensoren überwachungsfreie Sektoren freiläßt und da der Bereich der Rohrwandung unter den Polschuhen 36,37 auch mit enger gesetzten Sensoren nicht erfaßbar wäre, ist das aus Fig. 2 ersichtliche System aus zwei Polschuhen (mitsamt darauf angeordneten Magnetspulen 43,44 und den Sensoren 40 mitsamt deren Halterungen 42) auf einem Ringträger 45 gelagert, der auf einer Wälzlagerung 46 (vgl. Fig. 1) um das Molchglied 4 in Richtung Fig. 2 eingezeichneter Pfeile 47 drehbar ist.

Beim Vorlauf des Molchs durch ein Rohr und gleichzeitiger Drehung des Magnetsystems 35 bewegen sich die Sensoren 40 auf Schraubenlinien, die um so dichter verlaufen, je größer die Umfangsgeschwindigkeit des Trägers 45 gegenüber der Vorschubgeschwindigkeit des Molchs 2 ist. Mit flächig aufgeweiteten Sensorschleifen oder gar Gruppen solcher achsparallel aneinandergereihter Schleifen lassen sich flächendeckende wie auch überlappende Überwachungen schaffen.

Mit beiden Streufluß-Meßsystemen 22 und 35 lassen sich allerdings nur Risse und sonstige Oberflächenfehler feststellen. Wandschwächungen durch Rostfraß von außen oder innen u. dgl. lassen sich damit nicht zuverlässig aufdecken.

In dieser Hinsicht ist ein elektrodynamisches Utralschall-Verfahren geschaffen worden, welches sich mit einem oder beiden der vorhandenen Streufeld-Meßsysteme kombinieren läßt, um über das Magnetfeld Schwingungen in der Rohrwand zu erzeugen und deren radiale Laufzeit zur Außenwandung und zurück als Maß für die Wandstärke zu messen.

In einer gegenüber der Fig. 2 vergrößerten Detaildarstellung von Magnetkopf 37 und der benachbarten Wandung des Rohres 1 werden die physikalischen Vorgänge veranschaulicht.

Der zur Erzielung einer hohen Induktion mit leicht konischen Wandungen 48,49 gegen das Rohr 1 zulaufende Magnetkopf 37 endet mit einer planen Stirnfläche 50 im Abstand vom Rohr 1. In dem verbleibenden Luftspalt ist eine Luftspule 51 eingesetzt. Während der Magnetkopf 37 eine gleichförmige oder zumindest quasistationäre Induktion liefert, wird die Luftspule mit starken und sehr steilflankigen Stromimpulsen beaufschlagt, deren Durchflutungsrichtung im Sinne der Richtungszeichen 52,53 angenommen werden soll. Dann bildet sich in der benachbarten Rohrwandung eine gegeninduzierte Stromschleife mit entgegengesetzter Stromrichtung entsprechend den Richtungssymbolen 54,55, wobei dieser Strom in dem Feld des Magnetkopfs 37 fließt und damit eine im Rohr wirksame Lorentzkraft erzeugen, wie sie beispielsweise auch den Vortrieb von Elektromotoren mit quer zu einem Magnetfeld verlaufenden Strom durchflossenen Leitern bewirkt. Eine solche Kraft ist hier durch einen Pfeil 56 angedeutet.

Unter einer solchen Kraft ergeben sich Materialschwingungen, die durch eine Wellenlinie 57 angedeutet sind und sich quer zum Rohr fortpflanzen, um an einer gegenüberliegenden Rohraußenwandung 58 eine Reflektion zu erfahren und nach einer meßbaren Zeit von einigen Mikrosekunden als Reflektionswelle wieder in den Nahbereich der Luftspule 51 zu kommen. Diese kann nun die sich aus der Materialbewegung im Feld des Polschuhs 37 ergebende Spannungsinduktion aufnehmen und an eine Auswerteschaltung zurückmelden. Dies alles setzt für das Senden und den Empfang Qualitäten einer Hochfrequenz-Stromspule voraus.

Dabei ist weniger die Höhe als vielmehr die Laufzeit bis zum Auftreten eines (ersten) Reflektionssignals von Interesse, da sich daraus über die Ausbreitungsgeschwindigkeit von Ultraschallwellen im Material die örtliche Wanddicke ergibt. Ein typischer Wert für eine Wandstärke von 10 mm ist eine Laufzeit von insgesamt 3,5 Mikrosekunden .

Da sich der Magnetisierungskopf 37 mit dem Träger 45 dreht, wird der gesamte Rohrumfang in einem schraubenlinienförmigen Streifen erfaßt. Diese Streifen werden auch nicht stetig erfaßt, sondern wegen der impulsförmigen Sendesignale (von beispielsweise einer Mikrosekunde Dauer ) und zwischenliegender Wartezeit auf die zugehörige Impulsantwort nur in einem Punktraster, das allerdings mit hinreichender Annäherung als "lückenlos" betrachtet werden kann.

Soweit die Schraubenlinie unerfaßte (schraubenförmig verlaufende) Zwischenbereiche freiläßt, können diese durch vervielfachte Meßeinrichtungen verkleinert werden. So läßt sich mit geringem Mehraufwand zusätzlich auch der Magnetkopf 36 mit einer Impulsgeberspule nach Art der Luftspule 51 ausstatten, wobei die entgegengesetzte Richtung des Magnetflusses (vom Rohr in den Polschuh hinein) unerheblich ist.

Soweit diese Unterteilung noch unzureichend erscheint, können auch die Nord- oder Südpole des Meßsystems 22 für eine entsprechende Ultraschall-Wanddickenmessung herangezogen werden. In Fig. 4 sind bei den Magnetköpfen 24 in strichpunktierten Linien Luftspulen 59 angedeutet, die gleichfalls zur Erzeugung steilflankiger Induktions-Impulse im Mikrosekundenbereich in der Lage sind und in Kombination mit dem magnetischen Gleichfeld der Polschuhe 24 Ultraschallwellen in der Wandung auszulösen vermögen, deren Laufzeit bis zu einer Reflektionsfläche und zurück gemessen werden kann.

Die Stromspulen 51,52 können an ihren zur Rohrwand gerichteten Flächen mit einem Gleitwerkstoff versehen, also z.B. mit einem geeigneten Polyurethan belegt oder in dieses insgesamt eingegossen sein, um einen gleichbleibenden Wandabstand mittels eines Federandrucks zu schaffen. Zu den besonderen grundsätzlichen Vorteilen des Meßverfahrens gehört allerdings, daß es einen Kontakt an der Rohrwand nicht voraussetzt.

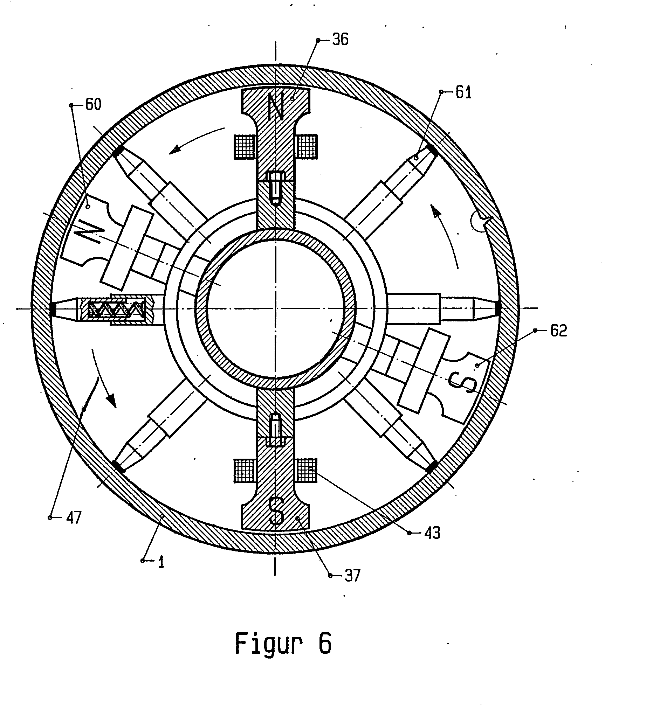

Im Fall derart eng am Umfang verteilter Stromspulen kann auch auf eine Stromspule im Bereich der Magnetköpfe 36,37 verzichtet werden. Die Magnetköpfe 36,37 können in einer Abwandlung auch fest mit dem Molchglied 4 verbunden werden, wobei die Sensoren weiterhin rotierend vorgesehen werden können oder aber durch eine größere Zahl und Dichte am Umfang enger zu setzen sind. Bei molchfesten Magnetköpfen 36 und 37 wird entsprechend Fig. 6 aber regelmäßig ein zweites, winkelversetzes System 60,62 ähnlicher Art erforderlich sein, da der von den Magnetköpfen 36,37 überstrichene Bereich selbst nicht auf Streufluß mit den Sensoren 61,60,62 überwachbar ist, da das Magnetfeld dort nicht in Umfangsrichtung, sondern vorwiegend radial verläuft.

Mit einem derartigen Meßsystem läßt sich eine gründliche und weitgehende Erfassung der Rohrwandung mit magnetischen Meßtechniken durchführen. Die Meßsysteme sind dabei mit einem robusten Aufbau versehbar, was für die rohen Beanspruchungen erforderlich ist. In mechanischer Hinsicht ergibt sich aber auch eine leichte Anpaßbarkeit der Systeme an unterschiedliche Rohrleitungen. So besitzt das Meßsystem 22 aufgrund seiner beweglichen, federgestützten Lagerung einen beträchtlichen Einsatzbereich hinsichtlich verschiedener Rohrdurchmesser. Es versteht sich aber, daß im Bedarfsfall eine größere oder kleinere Anzahl von Elektromagneten auf einem anderen Molchglied zu montieren sind, um eine Anpassung an einen größeren oder kleineren Rohrdurchmesser zu erzielen. Desgleichen sind die Magnetköpfe 36,37 und die Sensor-Halterungen 42 demontierbar am Ringträger 45 befestigt, so daß sie erforderlichenfalls auch auf einen größeren oder kleineren Ringträger umgesetzt werden können.

Es versteht sich, daß die Ansteuerung und Abfrage der Magnetsensoren und Luftspulen wie auch die Versorgung der Elektromagnete einigen Aufwand an elektrischer Leistung und elektronischen Meßschaltungen voraussetzt. Diese Schaltungen lassen sich aber von den vorbeschriebenen Funktionen her mit Schaltungen verwirklichen, die dem Fachmann vertraut sind. Der zugehörige Schaltungsaufwand wird in den Molchgliedern 3,4 druckfest und hermetisch abgedichtet untergebracht und ist somit geschützt.

Die Stromspule 51 oder auch die Stromspule 59 sind zur Ansteuerung und zur Auswertung mit gesonderten Sende- und Empfangseinrichtungen verbunden, die Störungen der Empfangsschaltung durch die Sendeschaltung durch geeignete Sperreinrichtungen am Eingang der Empfangsschaltung vermeiden, die während des Sendens wirksam sind. Es versteht sich natürlich, daß auch räumlich und elektrisch getrennte Sende-und Empfangsspulen verwandt werden können, beispielsweise in zueinander koaxialer Anordnung. Die zugehörigen Meß- und Regelschaltungen in den abgekapselten Innenräumen des Glieder-Molchs sind auch zur Speicherung der gewonnenen Meßergebnisse eingerichtet. Ferner können unter der Voraussetzung einer hinreichenden Übermittlungsmöglichkeit durch eine Telemetrie-Strecke vom Molch an eine oder mehrere Außenstationen Informationen, z.B. zur Molchortung oder Molchsteuerung ausgetauscht werden.

Sonst aber ist eine Speicherung vorzusehen, wobei vorzugsweise eine Wandung der Signale in Digitalwerte und eine digitale Speicherung vorzusehen ist, um die Verarbeitungs- und Speichermöglichkeiten der Digitaltechnik nutzen zu können. Dazu gehören auch die Möglichkeiten der Datenreduktion mit Auswahl der als aufzeichnungswert erscheinenden Daten.

Mit den jeweiligen Fehlerwerten ist regelmäßig auch eine Ortsangabe in Bezug auf die Rohrleitungslänge und die Stelle am Umfang abzuspeichern, wozu üblicherweise ein Meßrad als "Kilometerzähler" vorgesehen wird, das anhand von zusätz-

0196020

lichen Markierungen (Meßsignal von Schweißnähten, Funkmarkierung von außen durch das Rohr) überwacht und rückgestellt wird.

- 13 -

Patentansprüche:

1. Molch für elektromagnetische Prüfungen an Rohrleitungswandungen aus Stahl o. dgl. ferromagnetischem Material mit zumindest einem mit einer Magnetisierungsspule ausgestatteten und die Rohrleitungswandung zwischen zwei Polbereichen in den magnetischen Kreis einbeziehenden Magnetsystem, dadurch gekennzeichnet, daß in zumindest einem der Polbereiche (37,24) wenigstens eine im wesentlichen parallel zur Rohrleitungswand (1) ausgerichtete Hochfrequenz-Stromspule (51,59) zur Abgabe und/oder Aufnahme steilflankiger, induktiv an die Rohrleitungswandung gekoppelter Wellen im Ultraschallbereich angeordnet ist und daß die Stromspule (51,59) bzw. wenigstens eine der Stromspulen mit einer Meßeinrichtung zur Messung von Laufzeiten zwischen Sende- und Empfangsimpulsen ausgestattet ist.

2. Molch nach Anspruch 1, dadurch gekennzeichnet, daß die mit der Meßeinrichtung verbundene Stromspule (51,59) gleichzeitig als Sendespule mit einer Sendeeinspeisung verbunden ist.

3. Molch nach Anspruch 1 oder 2, dadurch gekennzeichnet, daß die Stromspule (51,59) mit kurzzeitigen Impulsen beaufschlagt wird, deren Zeitabstand oberhalb der größten zu erwartenden Laufzeit liegt.

4. Molch nach einem der Ansprüche 1 bis 3, dadurch gekennzeichnet, daß die Stromspule (51,59) an einem Pol (24,37) eines Magnetsystems für eine Streuflußmessung angeordnet ist, wobei die Streuflußmessung mit Hilfe von Streuflußsensoren (32, 33,40) nahe der Innenwand der Rohrleitungswandung (1) zwischen den Polen des Magnetsystems erfolgt.

5.      Molch nach einem der Ansprüche 1 bis 4, dadurch gekennzeichnet, daß er zumindest ein Magnetsystem (35) mit etwa in einer gemeinsamen Querschnittsebene angeordneten Polen (36,37) und Streuflußsensoren (40) zur Aufdeckung von in Längsrichtung der Rohrleitung (1) verlaufenden Wandungsrissen (38) aufweist.

6.      Molch nach Anspruch 5, dadurch gekennzeichnet, daß das Magnetsystem (35) in Umfangsrichtung umlaufende Streuflußsensoren (40) aufweist.

7.      Molch nach Anspruch 6, dadurch gekennzeichnet, daß das zugehörige Magnetsystem (36,37) zum gemeinsamen Umlauf mit den Streuflußsensoren (40) verbunden ist.

8.      Molch nach Anspruch 7, dadurch gekennzeichnet, daß zumindest an einem der Pole (37) des umlaufenden Magnetsystems (35) eine Hochfrequenz-Stromspule (51) angeordnet ist.

9.      Molch nach Anspruch 8, dadurch gekennzeichnet, daß daß den umlaufenden Streufluß-Sensoren (61) zugehörige Magnetsystem (60) stillstehend am Molch angeordnet und zu einem zweiten stillstehenden Magnetsystem (62) auf Lücke umfangsversetzt und axialversetzt ist.

10.     Molch nach einem der Ansprüche 5 bis 9, dadurch gekennzeichnet, daß die Pole (36,37) und Streuflußsensoren (40) an unterteilten, zur Durchmesseranpassung veränderlichen Speichen abgestützt sind.

11.     Molch nach einem der Ansprüche 5 bis 9, dadurch gekennzeichnet, daß die Pole (36,37) und Streuflußsensoren (40) lösbar an einem oder merheren auswechselbaren Ringelementen (45) befestigt sind.

12.    Molch nach einem der Ansprüche 1 bis 11, dadurch gekennzeichnet, daß er zumindest ein Magnetsystem (22) zu einer Streuflußmessung mit in Achsrichtung aufeinanderfolgenden Polen (23,24) umfaßt.

13.    Molch nach Anspruch 12, dadurch gekennzeichnet, daß mehrere Magnetsysteme ringförmig am Umfang des Molches verteilt angeordnet sind.

14.    Molch nach Anspruch 13, dadurch gekennzeichnet, daß die gleichnamigen Pole (23,24) der Magnetsysteme jeweils etwa in einer gemeinsamen Querschnittsebene liegen.

15.    Molch nach Anspruch 14, dadurch gekennzeichnet, daß zumindest eine der beiden Gruppen gleichnamiger Pole (24) mit einer Hochfrequenz-Stromspule (59) versehen ist.

16.    Molch nach Anspruch 15, dadurch gekennzeichnet, daß beide Gruppen von gleichnamigen Polen mit Hochfrequenz-Sendespulen versehen und gegeneinander in Umfangsrichtung auf Lücke versetzt sind.

17.    Molch nach einem der Ansprüche 13 bis 16, dadurch gekennzeichnet, daß die Magnetsysteme (22) lösbar und in Umfangsrichtung zur Erweiterung oder Verengung der Ringanordnung mit dem Molch (3) verbunden sind.

18.    Molch nach einem der Ansprüche 1 bis 17, dadurch gekennzeichnet, daß er mit einem Geschwindigkeitsregelungssystem und mit einer geregelten Querschnittsblendenanordnung (16,17) zur veränderlichen Staubildung am Molch (2) gegenüber einem vortreibenden Medium im Rohr (1) ausgestattet ist.

19.    Molch nach einem der Ansprüche 1 bis 18, dadurch gekennzeichnet, daß er mit reibschlüssig gegen die Innenwand der Rohrleitung andrückbaren Bremsen (19) ausgestattet ist.

20.     Molch nach einem der Ansprüche 1 bis 19, dadurch gekennzeichnet, daß er ein elektronisches Datenspeichersystem in einem zentralen Molchkörper (3,4) enthält.

21.     Molch nach Anspruch 20, dadurch gekennzeichnet, daß dem Datenspeichersystem eine Datenaufarbeitungs-Einrichtung zum Aussieben entbehrlicher Daten vorgeschaltet ist.

22.     Verfahren für elektromagnetische Prüfungen an Rohrleitungswandungen aus Stahl o. dgl. ferromagnetischem Material, bei dem ein mit an die Rohrleitungswandung heranführbaren Polschuhen zumindest eines Magnetsystems ausgestatteter Meßmolch durch die Rohrleitung gefördert wird, wobei dieser Magnetfelder in der Rohrleitungswandung induziert, dadurch gekennzeichnet, daß aus dem Magnetsystem (37,52,53) steilflankige starke elektromagnetische Impulse in der Rohrleitungswandung induziert werden, und daß die hierauf durch Magnetkräfte an der Rohrinnenwand angeregte und von der Rohraußenwand reflektierte Ultraschall-Schwingung in ihrer Laufzeit elektromagnetisch gemessen wird.

Fig.1

0196020

Figur 2

Figur 3

Figur 4

0196020

Figur 5

Figur 6